# EUROPÄISCHE PATENTSCHRIFT

(11) **EP 0 673 166 B1**
(45) Veröffentlichungstag und Bekanntmachung des Hinweises auf die Patenterteilung: **02.06.1999**
(21) Anmeldenummer: 94104201.2
(22) Anmeldetag: 15.03.1994
(51) Int. Cl.: H04N 7/22

(54) **Verfahren zur empfangsseitigen Taktversorgung für digital mittels ATM übertragene Videosignale in Faser-/Koaxial-Teilnehmeranschlussnetzen**
Method of clocktiming recovery in a receiver for digitally transmitted videosignals according to the ATM technique in fibre/coaxial subscriber networks
Méthode de récupération d'horloge dans un récepteur pour des signaux vidéo transmis numeriquement en mode ATM dans des réseaux coaxial/fibre optique d'abbonés

(43) Veröffentlichungstag der Anmeldung: 20.09.1995
(73) Patentinhaber: SIEMENS AKTIENGESELLSCHAFT, 80333 München (DE)
(72) Erfinder: Möhrmann, Karl Heinz, Dipl.-Ing., D-81369 München (DE)

(56) Entgegenhaltungen:
- EP-A- 0 460 398
- US-A- 4 591 906
- SYMPOSIUM RECORD CATV SESSIONS - 16TH INTERNATIONAL TV SYMPOSIUM, Juni 1989, MONTREUX, SWITZERLAND Seiten 217 - 229, XP000093627 VON LINGELSHEIM ET AL. 'MULTICHANNEL FIBRE OPTIC TRANSMISSION SYSTEM AT 1.3 GBIT/S/ - DIGITAL TV SIGNAL PROCESSING FOR TV TRANSMISSION IN OPTICAL FIBER NETWORKS'
- IEEE GLOBAL TELECOMMUNICATIONS CONFERENCE, Bd.1, 2. Dezember 1991, PHOENIX, ARIZONA Seiten 607 - 611, XP000326037 NIKAIN ET AL. 'A PROPOSED LOOP TRANSMISSION SYSTEM BASED ON A SWITCHED BROADBAND DIGITAL ACCESS FOR ENHANCED VIDEO AND DATA SERVICES'
- IEEE JOURNAL ON SELECTED AREAS IN COMMUNICATIONS, Bd.8, Nr.7, September 1990, NEW YORK, US Seiten 1313 - 1319, XP000179198 KANNO ET AL. 'FIBER-OPTIC SUBCARRIER MULTPLEXING VIDEO TRANSPORT EMPLOYING MULTILEVEL QAM'
- INTERNATIONAL BROADCASTING CONVENTION, 23. September 1988, BRIGHTON, UK Seiten 280 - 283 FOURDEUX ET AL. 'DIGITAL HDTV SIGNAL TRANSMISSION ON OPTICAL FIBRE'
- ELECTRONICS LETTERS, Bd.24, Nr.21, 13. Oktober 1988, STEVENAGE, HERTS. ,UK Seiten 1336 - 1338, XP000069885 SMITH ET AL. '64-CHANNEL DIGITAL TV DISTRIBUTION SYSTEM OPERATING AT 4.4 GBIT/S'

## Beschreibung

Neuere Entwicklungen der Fernmeldetechnik führen in der Ebene der Teilnehmeranschlußleitungen zu passiven optischen Telekommunikationssystemen, in denen jeweils eine Mehrzahl von dezentralen Einrichtungen (Teilnehmerstellen oder jeweils eine Mehrzahl von Teilnehmerstellen zusammenfassende sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß einer - insbesondere durch eine Vermittlungsstelle gegebenen - zentralen Einrichtung über einen Lichtwellenleiter-Bus verbunden ist (EP-A-0 171 080; ISSLS '88, Conf. Papers 9.4.1...5; BR Telecom Technol. J. 17(1989)2, 100...113).

In einem solchen passiven optischen Telekommunikationsnetz kann die Signalübertragung von der zentralen Einrichtung aus "downstream" zu den dezentralen Einrichtungen hin in einem TDM-Zellenstrom vor sich gehen, aus dem jede dezentrale Einrichtung nur die für ebendiese dezentrale Einrichtung bestimmten Zellen aufnimmt, und die Signalübertragung von den dezentralen Einrichtungen aus "upstream" zur zentralen Einrichtung hin kann in einem TDMA-Verfahren vor sich gehen, demzufolge eine dezentrale Einrichtung einen jeden Burst mit Hilfe einer von der zentralen Einrichtung her einrichtungsindividuell eingestellten Verzögerungseinrichtung synchronisiert aussendet (EP-A-0 460 398).
Die Signalübertragung downstream von der zentralen Einrichtung aus zu den dezentralen Einrichtungen hin und die Signalübertragung upstream von den dezentralen Einrichtungen aus zur zentralen Einrichtung hin kann dabei auch in ein- und demselben Wellenlängenfenster (z.B. im Wellenlangengleichlagebetrieb bei 1,3 µm) vor sich gehen.

Die Einführung neuer Breitbandkommunikationsdienste hängt ganz allgemein ab von Art und Umfang der bereits vorhandenen Fernmeldeinfrastrukturen mit den darin bereitgestellten Telekommunikationsdiensten und von der Nachfrage nach Breitbandtelekommunikationsmöglichkeiten. Dabei wird im Bereich der Privathaushalte das potentiell grösste Anschlußvolumen gesehen; dieses Anschlußpotential konkretisiert sich indessen zu einer effektiven Anschlußnachfrage nicht ohne entsprechend niedrige Kosten eines Breitband-Teilnehmeranschlusses.

Um einem Teilnehmer die Nutzung von Breitband-ISDN-Diensten (genannt werden z.B. interaktiver Videoabruf Video on Demand (VoD), Teleshopping, Informationsrecherche, aber auch Schmalbanddienste wie (N-)ISDN oder herkömmliche Telefonie (POTS)) zu ermöglichen, werden z.Zt. verschiedene Anschlußmöglichkeiten diskutiert. Besonders attraktiv sind Lösungen, bei denen bereits vorhandene Infrastruktur verwendet werden kann. Ein entsprechendes Medium stellen z.B. die Koaxialkabelnetze der CATV-Anbieter dar: Der Frequenzbereich von beispielsweise 50 bis 450 Mhz wird von konventionellen, Analogsignal-Fernsehkanälen genutzt; der Bereich unterhalb und oberhalb der Analogsignal-Fernsehverteilung ist bislang frei und läßt sich für neue Dienste nutzen. In den USA wird von einigen Cable-TV-Gesellschaften ein Teilbereich des bislang freien Bereichs für sog. Cablephone verwendet. Andere Betreiber denken an ein umfassenderes System, das einen Großteil der oben genannten Dienste im Rahmen eines Access-Networks z.B. auf ATM-Basis (AN/A) bietet, wobei in der Regel den koaxialen Teilnetzen wegen der begrenzten Reichweite eine optische Zubringerleitung (Fiber Feeder) vorgeschaltet sein kann (TELEPHONY, 01.11.93, 48 ... 53).
Man hat auch schon neben einem passiven optischen Netz (PON) mit Erweiterung durch ein Koaxialleitungs-Baumnetz für unidirektionale Verteilkommunikation (TV) ein weiteres passives optisches Netz (PON) für bidirektionale interaktive vermittelte Telekommunikation eingesetzt (Der Fernmeldeingenieur 46(1992)10, Bild 11.2 - System OPAL 4).

Gemäß einer noch vorteilhafteren Gestaltung eines Teilnehmeranschlußnetzes mit jeweils einer Mehrzahl von teilnehmerseitigen Netzabschlußeinheiten gemeinsamen Koaxialleitungs-Baumnetzen und diese Koaxialleitungs-Baumnetze mit Verbindungseinrichtungen verbindenden Lichtwellenleitern können die Koaxialleitungs-Baumnetze jeweils über eine Konvertereinrichtung an ein optische Verzweiger enthaltendes Lichtwellenleiter-Baumnetz für sowohl bidirektionale Telekommunikationsdienste, vorzugsweise im Wellenlängengetrenntlagebetrieb, als auch unidirektionale Verteilkommunikationsdienste angeschlossen sein, was eine sehr wirtschaftliche Versorgung einer großen Anzahl von Teilnehmern sowohl mit Verteilkommunikationsdiensten als auch mit interaktiven vermittelten Telekommunikationsdiensten ermöglicht.
Dabei kann das Lichtwellenleiter-Baumnetz ein passives optisches Netz oder ein mit Verstärkern versehenes aktives optisches Netz oder auch nur eine einfache Punkt-zu-Punkt-Verbindung sein; die einzelnen Koaxialleitungs-Baumnetze können unabhängig davon und von einander verstärkerfreie passive bzw. mit Verstärkern versehene aktive Koaxialleitungs-Baumnetze sein. Diese Flexibilität ermöglicht die Realisierung auch von Netzen mit ganz unterschiedlichen Reichweiten.
Die bidirektionalen bzw. interaktiven Telekommunikationsdienste können mittels in Form von ATM-Signalen übertragener Digitalsignale durchgeführt werden.
Bei bidirektionaler Digitalsignalkommunikation können die Bitraten von und zum Teilnehmer unterschiedlich sein; jedem Teilnehmer kann die von ihm benötigte Bitrate individuell zugeteilt sein. Auch auf den einzelnen Koaxialleitungsnetzen müssen die Bitraten nicht einheitlich sein, vielmehr können auf jedem Koaxialleitungsnetz auch unterschiedliche Übertragungsbitraten für die beiden Übertragungsrichtungen vorgesehen sein. Auch auf dem Lichtwellenleiter-Baumnetz können die Bitraten der beiden Übertragungsrichtungen unterschiedlich sein; sie sind unabhängig von den Bitraten der Koaxialleitungs-Baumnetze wählbar. Verwenden Lichtwellenleiter-Baumnetz und Koaxialleitungs-Baumnetz unterschiedliche Bitraten, so findet eine Geschwindigkeitsanpassung in der zwischen Lichtwellenleiter-Baumnetz und Koaxialleiter-Baumnetz liegenden Konvertereinrichtung statt.

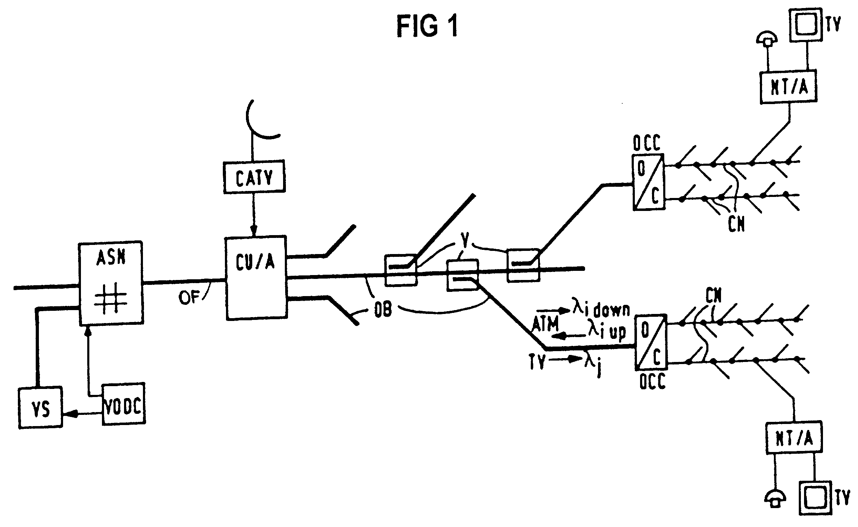

In Fig.1 ist schematisch ein Beispiel eines solchen Teilnehmeranschlußnetzes dargestellt. Dabei sind im rechten Teil der Zeichnung Koaxialleiternetze CN in der üblichen Baumstruktur angedeutet, wie sie in der Regel bereits verlegt sein werden. Teilnehmerseitig sind die Koaxialleiter jeweils mit einer Netzabschlußeinrichtung NT/A abgeschlossen, welche ihre Empfangs- und Sendesignale jeweils derart konvertieren möge, daß der Anschluß gängiger Endgeräte möglich ist; eine Netzabschlußeinrichtung NT/A weist z.B. Anschlüsse für Verteilfernsehen bzw. Video on Demand, für herkömmliche Telefonie (POTS) u./o. Schmalband-ISDN oder auch für einen beliebigen Breitband-ISDN-Dienst auf.
Auf der teilnehmerabgewandten Seite sind die Koaxialleiternetze CN jeweils über eine Opto-/Coax-Konvertereinrichtung (Optical/Coax-Converter) OCC an eine optische Anschlußleitung eines über optische Verzweiger (Splitter) V verzweigten Lichtwellenleiternetzes OB angeschlossen, welches die Koaxialleiternetze mit einer vorzugsweise mit einem (ATM-) CrossConnect gebildeten Verbindungseinrichtung (Connection Unit) CU/A verbindet. An eine solche Verbindungseinrichtung CU/A können, wie dies auch in Fig.1 angedeutet ist, mehrere derartige Lichtwellenleiternetze OB angeschlossen sein; in entsprechender Weise können, wie dies ebenfalls in Fig.1 angedeutet ist, an eine Konvertereinrichtung OCC mehrere, z.B. bis zu vier, Koaxialleiter-Subnetze CN angeschlossen sein. Wenn ein Koaxialleiternetz CN den Anschluß von z.B. 100 Teilnehmern ermöglicht, bedient die Konvertereinrichtung OCC z.B. 400 Teilnehmer und die Verbindungseinrichtung (Connection Unit) CU/A z.B. 2000 bis 4000 Teilnehmer.

Die Übertragung im Teilnehmeranschlußnetz kann auf der Basis von ATM-Zellen (cell-based) mit einem systemspezifischen Overhead vor sich gehen. Dabei wird in der Übertragungsrichtung zum Teilnehmer hin (downstream) die Datenrate mit z.B. 622 Mbit/s grösser sein als die Datenrate in der umgekehrten Übertragungsrichtung (upstream) mit z.B. 155 Mbit/s, wobei aus übertragungstechnischer Sicht die downstream-Übertragung in mehreren Kanälen (z.B. in vier Kanälen à 155 Mbit/s) vor sich gehen kann.

In dem in Fig.1 skizzierten System werden analoge TV-Verteilsignale von einer Kopfstelle (CATV Headend) her in die den angeschlossenen Teilnehmern gemeinsame Verbindungseinrichtung (Connection Unit) CU/A eingespeist und zu allen angeschlossenen Teilnehmern hin übertragen. Diese Fernsehsignale können beim Teilnehmer von einem an dessen Netzabschlußeinrichtung NT/A angeschlossenen, in Fig.1 mit TV bezeichneten Fernsehempfänger in üblicher Weise empfangen werden.

Neben den analogen TV-Signalen mögen in dem in Fig.1 skizzierten Telekommunikationssystem der Verbindungseinrichtung (Connection Unit) CU/A digitale Signale im ATM-Format zugeführt werden. Solche Signale können z.B. digitale Videosignale eines (auch einen ATM-Rückkanal für die Programmwahl durch den TV-Teilnehmer einschliessenden) Video-on-Demand-Dienstes oder auch breitbandige interaktive Datensignale sein, wobei die digitalen Videosignale mittels eines entsprechenden, in Fig.1 nicht gesondert dargestellten Zusatzgerätes (Set-Top-Box) ebenfalls vom Fernsehempfänger TV empfangen werden.

Des weiteren können in dem in Fig.1 skizzierten System in beiden Richtungen schmalbandige ATM-Sprach- und ggf. auch Datensignale übertragen werden, was in Fig.1 durch ein an die Netzabschlußeinrichtung NT/A angeschlossenes Telefon angedeutet wird. Weitere Dienste, welche den Anschluß weiterer Endgeräte an die jeweilige Netzabschlußeinrichtung NT/A erfordern können, sind möglich, ohne daß dies in Fig.1 noch dargestellt werden müsste.

Die ATM-Signale werden über eine ATM-Vermittlungseinrichtung ASN geleitet. Für Video-On-Demand ist dabei ein Video-Server VS erforderlich, in welchem die abzurufenden Video-Programme (Filme) gespeichert sind, und zwar in der Regel in digitaler und datenkomprimierter Form, beispielsweise nach dem bei ISO-MPEG erarbeiteten MPEG2-Algorithmus mit z.B. 4 Mbit/s. Der Server VS möge von einem Controller VODC gesteuert werden, welcher von den angeschlossenen Teilnehmern über den jeweiligen Rückkanal kommende Signalisierungsinformationen auswertet und sowohl die Programmausgabe aus dem Video-Server VS als auch die ATM-Koppeleinrichtung ASN entsprechend steuert.

Die generelle Verwendung des Asynchronen Transfer-Modus (ATM) für die digitalen Signale aller Dienste (mit Ausnahme des auf Analogsignalübertragung basierenden TV-Verteildienstes) ist auf Grund seiner hohen Flexibilität außerordentlich vorteilhaft. Es lassen sich Signale mit unterschiedlichen, beliebigen Datenraten beliebig mischen; eine Wahl von Datenraten entsprechend bestimmten Hierarchiestufen ist überflüssig. Dies ist insbesondere auch für Videoübertragung sehr interessant, da zum einen eine allgemein vereinbarte Datenrate für ein Videosignal ohnehin nicht existiert und zum andern durch Wahl unterschiedlicher Datenraten unterschiedliche Bildqualitäten geboten werden können. Dies ist insbesondere im Zusammenhang mit einer skalierbaren Codierung interessant, wobei den Teilnehmern wahlweise (zu unterschiedlichem Preis) eine hohe Qualität, etwa durch ein HDTV-Signal mit einer hohen Datenrate, oder eine niedrigere Qualität, etwa durch ein TV-Signal mit 625-Zeilen-Auflösung, geboten werden kann.

Wie sich in der Praxis zeigt, ist nun insbesondere bei in Form von ATM-Signalen übertragenen digitalen datenkomprimierten Videosignalen die Wiedergewinnung eines stabilen Taktsignals auf der Empfangsseite für das einwandfreie Funktionieren des empfangsseitigen Decoders unabdingbar: In einem ATM-System geht die Signalübertragung grundsätzlich asynchron vor sich, d.h. die einzelnen ATM-Zellen treffen zwar in der richtigen Reihenfolge, aber in ungleichmäßigen Zeitabständen im Empfänger ein. Die Wiedergewinnung eines hinreichend stabilen Empfangstaktes ist dabei zwar prinzipiell möglich, etwa durch Einsatz eines großen Pufferspeichers zur Glättung des Datenstroms (mit der Folge unerwünschter Signalverzögerung), durch Mitübertragung von regelmäßig eingeblendeten Zeitmarken u.a.; solche Maßnahmen sind aber aufwendig und teuer. Für die Akzeptanz des Systems ist aber, wie schon erwähnt, eine kostenoptimierte Lösung speziell bei den Teilnehmereinrichtungen von großer Bedeutung .

Die Erfindung zeigt nun einen Weg zu einer vorteilhafteren Gewinnung einer stabilen empfangsseitigen Taktinformation für ggf. datenkomprimierte ATM-Videosignale.

Die Erfindung betrifft ein Verfahren zur empfangsseitigen Taktversorgung zu von einer Digitalsignalquelle, insbesondere TV-Signal-Quelle, über eine Verbindungseinrichtung und ein daran angeschlossenes, jeweils einer Mehrzahl von teilnehmerseitigen Netzabschlußeinheiten gemeinsames Lichtwellenleiter- und/oder Koaxialleitungs-Baumnetz zu den teilnehmerseitigen Netzabschlußeinheiten in Form von ATM-Signalen übertragenen Digitalsignalen, insbesondere digitalen datenkomprimierten TV-Verteilsignalen; dieses Verfahren ist erfindungsgemäß dadurch gekennzeichnet, daß der (die) benötigte(n) Signaltakt(e) jedenfalls von der Verbindungseinrichtung aus gesondert und regelmäßig zu allen an das Lichtwellenleiter- u./o. Koaxialleiter-Baumnetz angeschlossenen Netzabschlußeinheiten übertragen wird (werden), wo damit das aus den empfangenen ATM-Zellen gewonnene digitale Signal zeitregeneriert wird.

Die Erfindung, die davon ausgeht, daß für die (Video-)Signalcodierung nur eine endliche Anzahl unterschiedlicher Datenraten verwendet wird, bringt den Vorteil mit sich, daß die Signaltakte von der(Video-)Signalquelle bis zur Verbindungseinrichtung (Connection Unit) auch in einer Weise (z.B. mittels eingeblendeter Zeitmarken in Form von bestimmten ATM-Zellen) übertragen werden können, die mit einem höheren Aufwand für die Übertragung bzw. Wiedergewinnung eines stabilen Taktsignals verbunden sein kann, da dies für alle über die Verbindungseinheit an die betreffende (Video-)Signalquelle angeschlossenen Teilnehmer gemeinsam geschehen kann, daß dagegen der teilnehmerindividuell zu treibende Aufwand für die Taktwiedergewinnung relativ niedrig gehalten werden kann.

Hierzu kann in weiterer Ausgestaltung der Erfindung der (die) benötigte(n) Signaltakt(e) von der Verbindungseinrichtung aus in Form von Pilotsignalen über das Lichtwellenleiter- u./o. Koaxialleitungs-Baumnetz zu allen daran angeschlossenen Netzabschlußeinheiten übertragen werden.

Dabei kann jede Taktfrequenz direkt von einer übertragenen Pilotfrequenz abgeleitet werden, die in einem spektral nicht anderweitig genutzten Bereich, z.B. unterhalb von 10 MHz, über die optischen Fasern bzw. das koaxiale Baumnetz zu den teilnehmerseitigen Abschlußeinrichtungen übertragen werden. Die Pilotfrequenzen sind zweckmäßig auf einfache Weise mit den erforderlichen Taktfrequenzen verknüpft, z.B. in Form von deren ganzzahligen Teilen oder Vielfachen. Eine Gewinnung der Pilotfrequenzen in der Abschlußeinrichtung ist damit auf einfache Weise mit Filtern möglich. Mittels eines FIFO-Speichers wird das aus den empfangenen ATM-Zellen gewonnene digitale TV-Signal zeitregeneriert, d.h. mit verjittertem Takt eingelesen und mit dem stabilen Takt ausgelesen, und dem VideoDecoder zugeführt.

Alternativ ist es auch möglich, mit den Taktfrequenzen numerisch nicht verknüpfte Pilotfrequenzen festzulegen und diese Träger mit den erforderlichen Taktfrequenzen zu modulieren; dies erhöht die Flexibilität bei der spektralen Zuordnung.

Auch hier können die Taktfrequenzen auf der Empfangsseite durch einfache Maßnahmen wie Filterung, Demodulation wiedergewonnen werden.

In einer anderen alternativen Ausgestaltung der Erfindung kann man bei netzweiter frequenzmäßiger Synchronisation der Videocoder bzw. -Server und der Connection Unit auch Taktfrequenzen für die Videosignale verwenden, welche auf einfache Weise numerisch aus der Taktfrequenz eines der "downstream" zu allen Netzabschlußeinrichtungen hin übertragenen ATM-Signale (z.B. 149,76 MHz entsprechend VC-4 der Synchronen Digitalen Hierarchie) abgeleitet werden können; die Übertragung zusätzlicher Pilotsignale kann dabei entfallen.

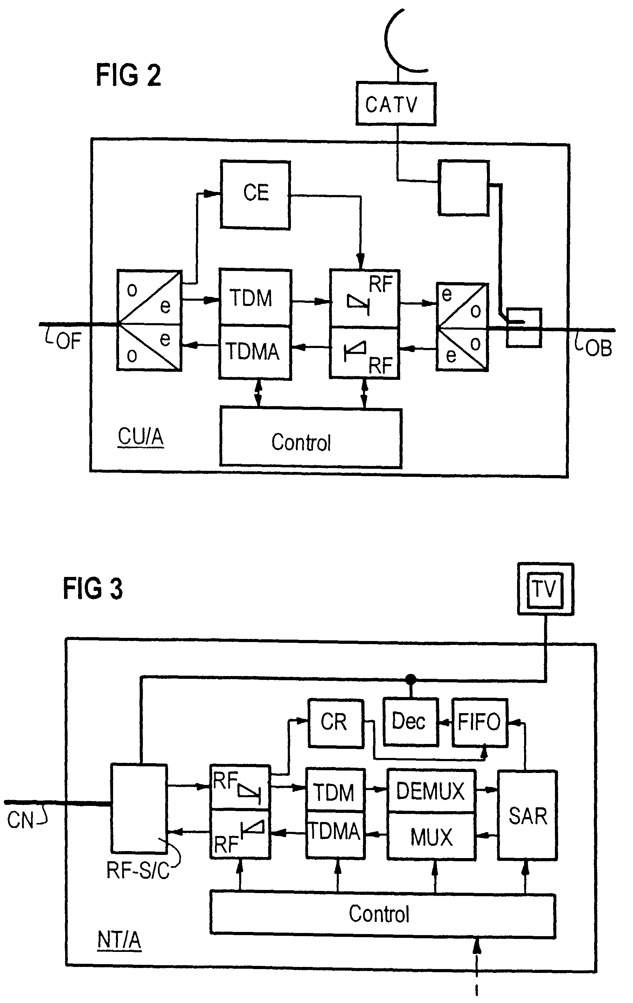

An Hand von Fig.2 und Fig.3 wird die Erfindung noch weiter erläutert.

Aus Fig.2 werden nähere schaltungstechnische Einzelheiten einer Verbindungseinrichtung (Connection Unit) CU/A ersichtlich, die auf der teilnehmerabgewandten Seite über einen Lichtwellenleiter (Optical Feeder) OF mit einer ATM-Vermittlungseinrichtung (ASN in Fig.1) und auf der teilnehmerzugewandten Seite über ein Lichtwellenleiter-Baumnetz OB (siehe auch in Fig.1) und diesem nachfolgende Koaxialleiter-Baumnetze (CN in Fig.1) mit teilnehmerindividuellen Netzabschlußeinrichtungen (NT/A in Fig.1) verbunden sein möge. Der Lichtwellenleiter OF ist in der Verbindungseinrichtung (Connection Unit) CU/A mit einem optoelektrischen Empfänger o/e und elektrooptischen Sender o\e abgeschlossen; das Lichtwellenleiter-Baumnetz OB ist in der Verbindungseinrichtung (Connection Unit) CU/A mit einem optoelektrischen Empfänger e\o und elektrooptischen Sender e/o abgeschlossen. Dazwischen liegen Einrichtungen TDM/TDMA, die nach an sich bekannten und daher hier nicht weiter erläuterungsbedürftigen Prinzipien die Aufnahme von für die Verbindungseinrichtung (Connection Unit) CU/A bestimmten ATM-Zellen aus dem downstream über den Lichtwellenleiter OF übertragenen TDM-Zellenstrom und die Abgabe von upstream in einem TDMA-Verfahren über den Lichtwellenleiter OF zu übertragenden ATM-Zellen bzw. die Aufnahme von für die Verbindungseinrichtung (Connection Unit) CU/A bestimmten ATM-Zellen aus dem upstream über den Lichtwellenleiter OB übertragenen TDMA-Zellenstrom und die Abgabe von downstream über den Lichtwellenleiter OB zu übertragenden ATM-Zellen bewirken mögen; ferner ist ein RF(Radio Frequency)-Modulator/Demodulator vorgesehen. Über TDM-/TDMA-Aufnahmeeinrichtung und RF-Modulator werden die vom Lichtwellenleiter OF her in downstream-Richtung aufgenommenen ATM-Signale, darunter auch digitale TV-Signale, zum Lichtwellenleiter-Baumnetz OB hin weitergeleitet. Die TDMA-Einrichtung für die Übertragung über den Lichtwellenleiter OF kann bei reiner Punkt-zu-Punkt-Übertragung auch durch einen TDM-Multiplexer ersetzt sein. In dem in downstream-Richtung übertragenen TDM-Zellenstrom mögen auch, wie dies oben im Blick auf Fig.1 bereits erläutert wurde, von der jeweiligen TV-Signalquelle Video-Server VS in Fig.1) herrührende Taktsignale für die im TDM-Zellenstrom übertragenen digitalen TV-Signale enthalten sein, beispielsweise in Form bestimmter ATM-Zellen, die gewissermaßen eingeblendete Zeitmarken darstellen; um daraus ein stabiles Taktsignal wiederzugewinnen, ist mit dem optoelektrischen Empfänger o/e eine Taktsignal-Wiedergewinnungseinrichtung CE verbunden. Taktsignal-Übertragung zur Verbindungseinrichtung (Connection Unit) CU/A und Taktsignal-Wiedergewinnung in der Verbindungseinrichtung (Connection Unit) CU/A können relativ aufwendig sein, da sie für alle über die gerade betrachtete Verbindungseinrichtung (Connection Unit) CU/A an den betreffenden Video-Server (VS in Fig.1) angeschlossenen Teilnehmer (NT/A in Fig.1) gemeinsam vor sich gehen; beide Vorgänge brauchen hier jedoch nicht weiter erläutert zu werden, da dies zum Verständnis der Erfindung nicht erforderlich ist. Die Taktsignal-Wiedergewinnungseinrichtung CE führt nun ausgangsseitig zum RF-Modulator der Verbindungseinrichtung (Connection Unit) CU/A , so daß die benötigten, in der Taktsignal-Wiedergewinnungseinrichtung CE wiedergewonnenen Signaltakte von der Verbindungseinrichtung (Connection Unit) CU/A aus gesondert in Form von Pilotsignalen über das Lichtwellenleiter- u./o. Koaxialleitungs-Baumnetz OB-CN (in Fig.1) zu allen daran angeschlossenen Netzabschlußeinheiten NT/A (in Fig.1) übertragen werden.

Die Pilotsignale können in einem spektral nicht anderweitig genutzten Bereich über die optischen Fasern OB bzw. das koaxiale Baumnetz CN zu den teilnehmerseitigen Abschlußeinrichtungen NT/A übertragen werden, z.B. unterhalb von 10 MHz; aus der jeweiligen Pilotfrequenz kann die betreffende Taktfrequenz direkt abgeleitet werden. Dazu sind die gewählten Pilotfrequenzen zweckmäßigerweise auf einfache Weise mit den benötigten Taktfrequenzen verknüpft, vorzugsweise in Form ganzzahliger Teile oder Vielfache dieser Taktfrequenzen. In der teilnehmerseitigen Netzabschlußeinrichtung NT/A ist dann auf einfache Weise durch Filterung die Wiederherstellung der Taktfrequenzen möglich.
Alternativ dazu ist es auch möglich, mit den benötigten Taktfrequenzen numerisch nicht verknüpfte Pilotfrequenzen festzulegen und diese dann mit den benötigten Taktfrequenzen zu modulieren; dies ist mit einer erhöhten Flexibilität bei der spektralen Zuordnung verbunden. Auch hierbei können in der teilnehmerseitigen Netzabschlußeinrichtung NT/A auf einfache Weise durch Filterung und Demodulation die Taktfrequenzen wiedergewonnen werden.
Bei netzweiter frequenzmäßiger Synchronisation der (TV-) Signal-Quellen (VS in Fig.1) und der Verbindungseinrichtungen CU/A 8in Fig.1 und Fig.2) kann man in einer weiteren Alternative die Taktfrequenzen für die Video-Digitalsignale auch auf Werte beschränken, die auf einfache Weise numerisch aus der Taktfrequenz (z.B. 149,76 MHz entsprechend der Bitrate eines VC4-Signals der Synchronen Digitalen Hierarchie SDH) eines der "downstream" zu allen Netzabschlußeinrichtungen NT/A hin übertragenen ATM-Signale ableitbar ist; die Übertragung zusätzlicher Pilotsignale kann dann entfallen. Die Video-Server (VS in Fig.1) werden für das Auslesen auf diese Frequenz synchronisiert.

Mit den so von der Verbindungseinrichtung CU/A (in Fig.1 und Fig.2) aus gesondert über das Lichtwellenleiter- bzw. Koaxialleitungs-Baumnetz OB-CN (in Fig.1) zu allen daran angeschlossenen Netzabschlußeinheiten NT/A übertragenen Signaltakten wird schließlich in der jeweiligen Netzabschlußeinheit NT/A das aus den empfangenen ATM-Zellen gewonnene (Video-) Digitalsignal zeitregeneriert, wie dies auch in Fig.3 angedeutet ist.
Aus Fig.3 werden schematisch für das Verständnis der Erfindung relevante schaltungstechnische Einzelheiten einer Netzabschlußeinrichtung NT/A ersichtlich, die eine Koaxialleitung CN des Koaxialleiter-Baumnetzes (CN in Fig.1) abschliessen möge. Den koaxialleitungsseitigen Abschluß bildet dabei ein RF(Radio Frequency)-Separator/-Combiner RF-S/C, an den ein RF(Radio Frequency)-Modulator/-Demodulator angeschlossen ist. Daran schliessen sich an eine Einrichtung TDM/TDMA an, die nach an sich bekannten und daher hier nicht weiter erläuterungsbedürftigen Prinzipien die Aufnahme von für die Netzabschlußeinrichtung NT/A bestimmten ATM-Zellen aus dem downstream übertragenen TDM-Zellenstrom und die Abgabe von upstream in einem TDMA-Verfahren zu übertragenden ATM-Zellen bewirken möge, und ein (De-)Multiplexer MUX/DEMUX sowie eine Einrichtung SAR zur Zellenbildung (Segmentation) und Zellenauflösung (Reassembling), was hier jedoch nicht weiter verfolgt werden soll, da dies zum Verständnis der Erfindung nicht erforderlich ist.
Gemäß Fig.3 ist nun an den RF-Demodulator eine Einrichtung CR zur Taktwiederherstellung (Clock Recovery) angeschlossen, die in der oben erwähnten Weise den (die) zum Empfang von (TV-) Digitalsignalen benötigten Signaltakt(e) wiederherstellen möge, mit dem (denen) dann das aus den empfangenen ATM-Zellen gewonnene (Video-)Digitalsignal zeitregeneriert wird. Dies kann, wie dies auch in Fig.3 angedeutet ist, mit Hilfe eines FIFO(First In First Out)-Speichers geschehen, in den das aus den empfangenen ATM-Zellen gewonnene und somit zunächst noch taktverjitterte (Video-)Digitalsignal von der Segmentation/Reassembling-Einrichtung SAR her im verjitterten Takt eingelesen wird und aus dem dieses (Video-)Digitalsignal mit dem von der Taktwiederherstellungseinrichtung CR abgegebenen zeitregenerierten Takt wieder ausgelesen wird. Das so zeittaktregenerierte Video-Digitalsignal gelangt dann zu einem Videodecoder Dec, mit dem schließlich der Video-Empfänger TV des beteffenden Teilnehmers verbunden ist. Analoge CATV-Verteilsignale werden vom RF-Separator/-Combiner RF-S/C her direkt dem Video-Empfänger TV zugeführt.

## Patentansprüche

1. Verfahren zur empfangsseitigen Taktversorgung zu von einer Digitalsignalquelle (VS), insbesondere TV-Signal-Quelle, über eine Verbindungseinrichtung (CU/A) und ein daran angeschlossenes, jeweils einer Mehrzahl von teilnehmerseitigen Netzabschlußeinheiten (NT/A) gemeinsames Lichtwellenleiter- u./o. Koaxialleitungs-Baumnetz (OB-CN) zu den teilnehmerseitigen Netzabschlußeinheiten (NT/A) in Form von ATM-Signalen übertragenen Digitalsignalen, insbesondere digitalen datenkomprimierten TV-Verteilsignalen,
**dadurch gekennzeichnet,**
daß der (die) benötigte(n) Signaltakt(e) jedenfalls von der Verbindungseinrichtung (CU/A) aus gesondert und regelmäßig zu allen an das Lichtwellenleiter- u./o. Koaxialleitungs-Baumnetz (OB-CN) angeschlossenen Netzabschlußeinheiten (NT/A) übertragen wird (werden), wo damit das aus den empfangenen ATM-Zellen gewonnene Digitalsignal zeitregeneriert wird.

2. Verfahren nach Anspruch 1,
**dadurch gekennzeichnet**,
daß der (die) benötigte(n) Signaltakt(e) von der Verbindungseinrichtung (CU/A) aus in Form von Pilotsignalen über das Lichtwellenleiter- u./o. Koaxialleitungs-Baumnetz (OB-CN) zu allen daran angeschlossenen Netzabschlußeinheiten (NT/A) übertragen wird (werden).

3. Verfahren nach Anspruch 2,
**dadurch gekennzeichnet,**
daß jede Taktfrequenz direkt von einer in einem spektral nicht anderweitig genutzten Bereich über die optischen Fasern (OB) bzw. das koaxiale Baumnetz (CN) zu den teilnehmerseitigen Abschlußeinrichtungen (NT/A) übertragenen Pilotfrequenz abgeleitet wird.

4. Verfahren nach Anspruch 3,
**dadurch gekennzeichnet**,
daß die Pilotfrequenzen mit den benötigten Taktfrequenzen in Form deren ganzzahliger Teile oder Vielfache verknüpft sind.

5. Verfahren nach Anspruch 2,
**dadurch gekennzeichnet**,
daß mit den Taktfrequenzen numerisch nicht verknüpfte Pilotfrequenzen festgelegt und diese Träger mit den Taktfrequenzen moduliert werden.

6. Verfahren nach Anspruch 1,
**dadurch gekennzeichnet**,
daß bei netzweiter frequenzmäßiger Synchronisation der (TV-) Signal-Quellen (VS) und der Verbindungseinrichtung (CU/A) für die (TV-)Digitalsignale einfach-numerisch aus der Taktfrequenz eines der "downstream" zu allen Netzabschlußeinrichtungen (NT/A) hin übertragenen ATM-Signale ableitbare Taktfrequenzen verwendet werden.

## Claims

1. Method for clock timing supply at the receiving end for digital signals, in particular digital data-compressed TV distribution signals, which are transmitted in the form of ATM signals from a digital signal source (VS), in particular TV signal source, via a connection unit (CU/A) and an optical waveguide and/or coaxial line tree network (OB-CN), which is connected to the said connection unit and is shared in each case by a plurality of network termination units (NT/A) at the subscriber end, to the network termination units (NT/A) at the subscriber end,
characterized
in that the required signal clock pulse(s) is (are) transmitted in any event from the connection unit (CU/A) separately and regularly to all of the network termination units (NT/A) connected to the optical waveguide and/or coaxial line tree network (OB-CN), in which units timing regeneration of the digital signal obtained from the received ATM cells is effected using the said signal clock pulse(s).

2. Method according to Claim 1,
characterized
in that the required signal clock pulse(s) is (are) transmitted from the connection unit (CU/A) in the form of pilot signals via the optical waveguide and/or coaxial line tree network (OB-CN) to all of the network termination units (NT/A) connected thereto.

3. Method according to Claim 2,
characterized
in that each clock frequency is derived directly from a pilot frequency which is transmitted in a range that is not otherwise utilized spectrally via the optical fibres (OB) and/or the coaxial tree network (CN) to the termination units (NT/A) at the subscriber end.

4. Method according to Claim 3,
characterized
in that the pilot frequencies are linked to the required clock frequencies in the form of integer fractions or multiples thereof.

5. Method according to Claim 2,
characterized
in that pilot frequencies which are not numerically linked to the clock frequencies are defined and these carriers are modulated with the clock frequencies.

6. Method according to Claim 1,
characterized
in that, given frequency synchronization of the (TV) signal sources (VS) and of the connection unit (CU/A) throughout the network, clock frequencies which can be derived in a simple manner numerically from the clock frequency of one of the ATM signals transmitted "downstream" to all the network termination units (NT/A) are used for the (TV) digital signals.

## Revendications

1. Procédé destiné à fournir une horloge côté réception pour des signaux numériques, notamment des signaux de télévision numériques avec compression de données, transmis sous forme de signaux ATM par une source de signaux numériques (VS), notamment une source de signaux de télévision, par l'intermédiaire d'un dispositif de connexion (CU/A) et d'un réseau arborescent à fibres optiques et/ou à câbles coaxiaux (OB-CN), raccordé à la source de signaux et commun à plusieurs unités terminales de réseau (NT/A) côté abonnés, vers les unités terminales de réseau (NT/A) côté abonnés,
caractérisé par le fait que
la ou les horloges de signaux nécessaires sont transmises dans tous les cas par le dispositif de connexion (CU/A), séparément et régulièrement, à toutes les unités terminales de réseau (NT/A) qui sont raccordées au réseau arborescent à fibres optiques et/ou à câbles coaxiaux (OB-CN) et dans lesquelles le signal numérique obtenu à partir des cellules ATM reçues est ainsi régénéré dans le temps.

2. Procédé selon la revendication 1,
caractérisé par le fait que
la ou les horloges de signaux nécessaires sont transmises à partir du dispositif de connexion (CU/A) sous forme de signaux pilotes par l'intermédiaire du réseau arborescent à fibres optiques et/ou à câbles coaxiaux (OB-CN) à toutes les unités terminales de réseau (NT/A) raccordées à celui-ci.

3. Procédé selon la revendication 2,
caractérisé par le fait que
chaque fréquence d'horloge est déduite directement d'une fréquence pilote qui est transmise dans un domaine spectral non utilisé par ailleurs par l'intermédiaire des fibres optiques (OB) ou du réseau arborescent coaxial (CN) aux dispositifs terminaux côté abonnés (NT/A).

4. Procédé selon la revendication 3,
caractérisé par le fait que
les fréquences pilotes sont combinées aux fréquences d'horloge nécessaires sous forme de diviseurs ou de multiples entiers de celles-ci.

5. Procédé selon la revendication 2,
caractérisé par le fait que
on fixe des fréquences pilotes qui ne sont pas combinées numériquement aux fréquences d'horloge et on module ces porteuses avec les fréquences d'horloge.

6. Procédé selon la revendication 1,
caractérisé par le fait que,
en présence d'une synchronisation fréquentielle, s'étendant à tout le réseau, des sources de signaux (de télévision) (VS) et du dispositif de connexion (CU/A), on peut utiliser pour les signaux numériques (de télévision) des fréquences d'horloge qui peuvent être facilement déduites numériquement de la fréquence d'horloge d'un des signaux ATM transmis "downstream" à tous les dispositifs terminaux de réseau (NT/A) .
